# EUROPEAN PATENT APPLICATION

(11) **EP 2 579 499 A1**
(43) Date of publication of application: **10.04.2013**
(21) Application number: 10852851.4
(22) Date of filing: 07.06.2010
(51) Int. Cl.: H04L 9/10, H04L 9/32

(54) **SIGNAL PROCESSING SYSTEM**

(71) Applicant: Mitsubishi Electric Corporation, Tokyo 100-8310 (JP)
(72) Inventor: SHIMIZU, Koichi, Tokyo 100-8310 (JP)
(74) Representative: Pfenning, Meinig & Partner GbR
(86) International application number: PCT/JP2010/059595
(87) International publication number: WO 2011/155011

(57) **Abstract**

A signal route 350 of a PUF (Physical Uncloneable Function) circuit is configured in each device 301. The signal route 350 of each device 301 is connected by a connection route 360 to form a transmission route. An arbiter 303 is connected at the end of the transmission route. A signal is transmitted in the transmission route from a device 1 to a device 3. The arbiter 303 monitors the signal passed through the transmission route, and generates an output signal reflecting a characteristic unique to the transmission route, based on monitoring results. The authentication of identity among a combination of a plurality of devices is enabled by examining the output signal.

## Description

### Technical Field

The present invention relates to a security apparatus for authentication, cryptography or the like, and more particularly to an apparatus for generating an identifier unique to a device which is necessary for authentication, a secret key which is necessary for encryption.

### Background Art

As for semiconductor devices in such as ASIC (Application Specific Integrated Circuit) or FPGA (Field Programmable Gate Array), there is a phenomenon that different outputs are obtained from devices of the same kind on which the same circuit is mounted, because each device has different device characteristics such as gate delay.
A circuit that produces such a phenomenon or its technology is called a Physical Unclonable Function or a Physical Uncloning technology. The circuit or the technology is expected to be applied for the purpose of authentication or encryption.
Note that Physical Unclonable Function and Physical Uncloning technology are referred to as PUF in the following description.
Additionally, a circuit that uses a PUF is called a PUF circuit.

A possible application of PUF is to use the different output from each device as the authenticator of each device or a cipher key for each device, treating the different output as information unique to each device.
An advantageous feature of PUF is that the unique information of each device does not remain in a non-volatile memory area when the PUF is not operating. This feature is expected to contribute to anti-tampering.
The unique information of each device is usually stored in a non-volatile memory area attached to a security device. In an attack called tampering, the memory is subject to a direct analysis and confidential information (unique information of the device) inside the memory is extracted.
Therefore, for a device where PUF is not employed, an anti-tamper mechanism such as to cover a memory with a metal case or the like and detect the opening of the case by a sensor such as an optical or physical switch is necessary as anti-tamper measures. If PUF is employed, such an anti-tamper mechanism can be expected to become unnecessary.

Non-Patent Literature 1 and Patent Literature 1 disclose typical examples of PUF.
Non-Patent Literature 1 and Patent Literature 1 disclose technologies that utilize variations in gate delay as a device characteristic.
Non-Patent Literature 1 describes a technology based on a delay difference between signals passing through two paths.
After an input signal is divided to flow in two paths, which of two paths a signal having reached a destination point before the other is determined by an arbiter, and the result is converted into bit information.
The two paths need to have the same layout length.
The paths, although having the same layout length, differ from each other in length when mounted on a device, in practice. This functions as PUF.
If the layout length differs from each other, the difference in layout is dominant, and thereby the result may always be the same regardless of distributions of the path length among the devices.

Fig. 7 shows a block diagram of the technology disclosed in Non-Patent Literature 1.
A bit generator 100 (PUF circuit) consists of a delay generation circuit 101 and an arbiter 105.
A signal route including two paths is formed between the delay generation circuit 101 and the arbiter 105.
Which of two signals 140 from the delay generation circuit 101 reached the arbiter 105 first is converted into bit information, and outputted as an output signal 106.
In the two paths inside the delay generation circuit 101, there are cross units 102 in which the path routes are crossed.
Whether to pass a signal straight or crossed through each cross unit 102 is controlled by a selection signal 103.

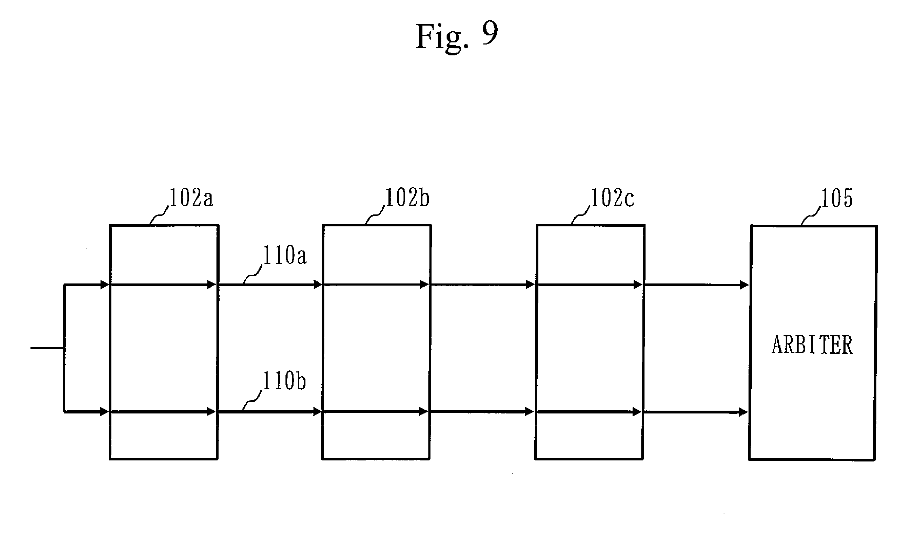

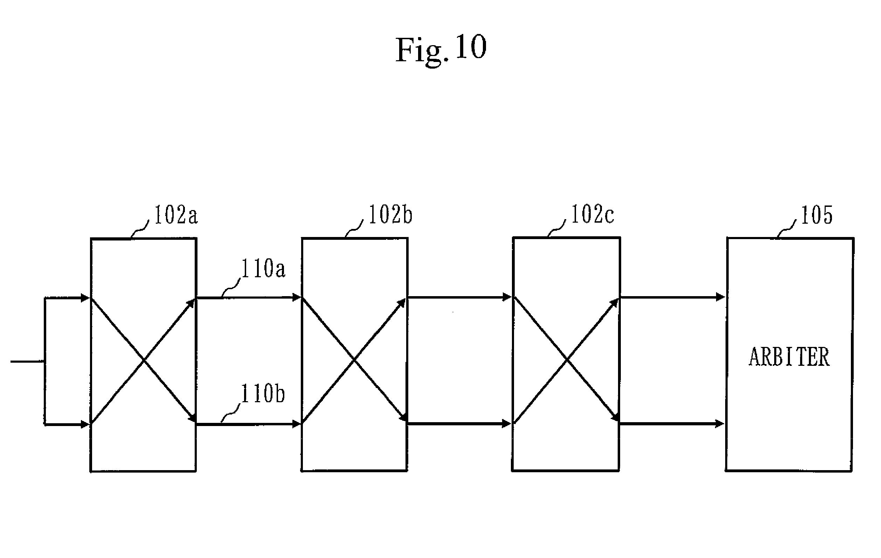

Fig. 9 shows a signal route having two straight paths with no crossing involved in every cross unit 102. Fig. 10 shows a signal route having two zigzag paths crossing in every cross unit 102.
In any case of Figs 9 and 10, there are two paths (path 110a and path 110b) in the signal route, and the paths have the same layout length.
If there are N cross units, then there are 2^{N} different path patterns. Accordingly, there are 2^{N} different input/output pairs.

Patent Literature 1 discloses a method employing ring oscillators or circuits that oscillate clocks by negative signal loopback.
The frequencies of clocks oscillated by ring oscillators of the same design vary depending on a device in practice. The method of Patent Literature 1, therefore, compares the frequencies of clocks generated by two ring oscillators of the same design, and the result is converted into bits.

Fig. 8 shows a block diagram of the technology disclosed in Patent Literature 1.
A bit generator 200 (PUF circuit) is composed of a ring oscillator section 201, a selection circuit 204, and a frequency comparison circuit 207.
The ring oscillator section 201 includes N ring oscillators 202. N clocks generated by these ring oscillators are outputted via signal lines 203.
From among the N clocks, two clocks are selected by the selection circuit 204.
An input signal 205 to the bit generator 200 is a selection signal for the selection. The selected two clocks are inputted to the frequency comparison circuit 207 via signal lines 206. The frequency comparison circuit 207 compares the frequencies of the two clocks.
Based on the comparison result of the frequencies, bits are generated as an output signal 208 from the bit generator 200.
The combination of two clocks selected from among N clocks results in N(N-1))/2 different input/output pairs.
According to the method of Patent Literature 1, a plurality of ring oscillators of the same design can be generated easily by making the hard macros of the ring oscillators. Therefore, layout constraints are relaxed compared to Non-Patent Literature 1, as an advantageous feature.

Anti-counterfeit measure is a possible option expected for PUF to be applied to.
There have been problems of counterfeit products fraud. Cheap imitations undermine the sales amounts real products should have enjoyed. The distribution of low quality imitations pretending that they are genuine degrades brand images.
For example, there is a technique of imitating high-grade products. Assume a product family of the same hardware configuration, in which products are graded according to the type of a circuit or firmware mounted on an LSI (Large Scale Integration). Specifically, information on the circuit or firmware of a high-grade product is analyzed and obtained, and then the circuit or firmware of the high-grade product is written on a cheap low-grade product so as to imitate the high-grade product.
The use of the PUF characteristic can help prevent such counterfeit products from operating.

### Citation List

### Patent Literature

Patent Literature 1: JP 2009-524998 A

### Non-Patent Literature

Non-Patent Literature 1: J. W. Lee et al., "A Technique to Build a Secret Key in Integrated Circuits for Identification and Authentication Applications" Proc. of the IEEE VLSI Circuits Symposium, pp. 176 - 179, 2004.

### Summary of Invention

### Technical Problem

Anti-counterfeit measures require the authentication of the device configuration in an apparatus configured with a plurality of devices (the apparatus is an object of counterfeiting) as a whole rather than each single unit of semiconductor devices or the like. Also required is an authenticator to determine an output based on the device configuration of the apparatus as a whole.
Conventional approaches such as those disclosed in Patent Literature 1 and Non-Patent Literature 1 are designed to mount a PUF circuit on a single device, and identify each device by the different PUF output for each device. That is, the authentication is only applicable on a device basis.
If the PUF circuit mounted on a single device such as those disclosed in Patent Literature 1 and Non-Patent Literature 1 is directly applied for anti-counterfeiting, since the authentication has to be performed on a device basis, the authentication process then needs to be performed multiple times to go through the whole apparatus including a plurality of devices mounted thereon.
This poses a problem that authentication processes increase as the number of device units composing an apparatus increases.
Another problem is that in the device-based authentication, authentication functions need to be implemented individually in each device. This results in an increase in the circuit scale and the amount of codes as the number of devices mounted on an apparatus increases.

A main objective of this invention is to solve problems as those discussed above, that is, to reduce the repetition of the authentication process for a plurality of devices, and control the circuit scale and the amount of codes required for the authentication of a plurality of devices.

### Solution to Problem

A signal processing system according to this invention includes a plurality of devices arranged in sequence. The signal processing system includes a signal route of a PUF (Physical Uncloneable Function) circuit configured in each of the plurality of devices, the PUF circuit including the signal route through which signals flow, and an output signal generation circuit which terminates the signal route, monitors the signals passed through the signal route, and generates an output signal reflecting a characteristic unique to the signal route based on monitoring results of the signals passed through the signal route; and a connection route that connects the signal route in each device to the signal route in a subsequent device. The signal routes in the plurality of devices and the connection route between each device form a transmission route. The signal processing system further includes the output signal generation circuit of the PUF circuit that is disposed in the last device in sequence of the plurality of devices, and terminates the transmission route. Predetermined signals flow through the transmission route in accordance with a sequence of devices, and are inputted by the output signal generation circuit in the last device in sequence. The output signal generation circuit in the last device in sequence monitors inputted signals, and generates an output signal reflecting a characteristic unique to the transmission route based on monitoring results.

### Advantageous Effects of Invention

According to the present invention, the signal route of a PUF circuit is configured in each device. The signal route of each device is connected by a connection route to form a transmission route. A signal flows along the transmission route according to the device sequence. An output signal generation circuit generates an output signal reflecting a characteristic unique to the transmission route.
Since the output signal reflects the unique characteristic of the transmission route deployed over a plurality of devices, the authentication of identity among a combination of a plurality of devices is enabled by examining the output signal. This needs fewer authentication processes for a plurality of devices, and also allows the circuit scale and the amount of codes required for the authentication of a plurality of devices to be controlled.

### Brief Description of Drawings

Fig. 1 shows a block diagram of a bit generator according to a first embodiment.
Fig. 2 illustrates a relationship between elements of the bit generator according to the first embodiment and those of conventional art.
Fig. 3 shows a block diagram of a bit generator according to a second embodiment.
Fig. 4 illustrates a relationship between elements of the bit generator according to the second embodiment and those of conventional art.
Fig. 5 shows a block diagram of a bit generator according to a third embodiment.
Fig. 6 shows a block diagram of a bit generator according to a fourth embodiment.
Fig. 7 illustrates the conventional art.
Fig. 8 illustrates the conventional art.
Fig. 9 illustrates the conventional art.
Fig. 10 illustrates the conventional art.

### Description of Embodiments

Bit generators (signal processing systems) described in first to fourth embodiments below are outlined first.
The bit generators in the first to fourth embodiments are configured by dividing an existing PUF circuit into a plurality of partial circuits and placing them separately on a plurality of semiconductor devices.
A PUF circuit is configured by dividing a circuit that behaves differently according to device characteristics (the circuit is referred to as a characteristic circuit) and placing divided partial circuits separately on a plurality of semiconductor devices so that a bit value is determined based on the characteristic of every device.
This results in the generation of a PUF output based on a combination of devices as a whole. If one of the devices in the combination is changed, this change affects the output based on the devices as a whole. This allows the change in the devices to be detected.
Further, wires on a substrate on which the semiconductor devices are mounted are used as part of a PUF circuit. This allows the PUF circuit to determine a bit value based also on substrate characteristics.
In the first to fourth embodiments, a description is given of the example in which the PUF circuit is divided into three parts. However, the PUF circuits may be divided into any number of circuits.
Further, a description is given of the case in which an existing circuit is divided. In a practical circuit design, however, partial characteristic circuits can be mounted in each semiconductor device, without assuming the existence of the existing circuit, to achieve a bit generator having a desired number of input bits, as a whole.

### Embodiment 1.

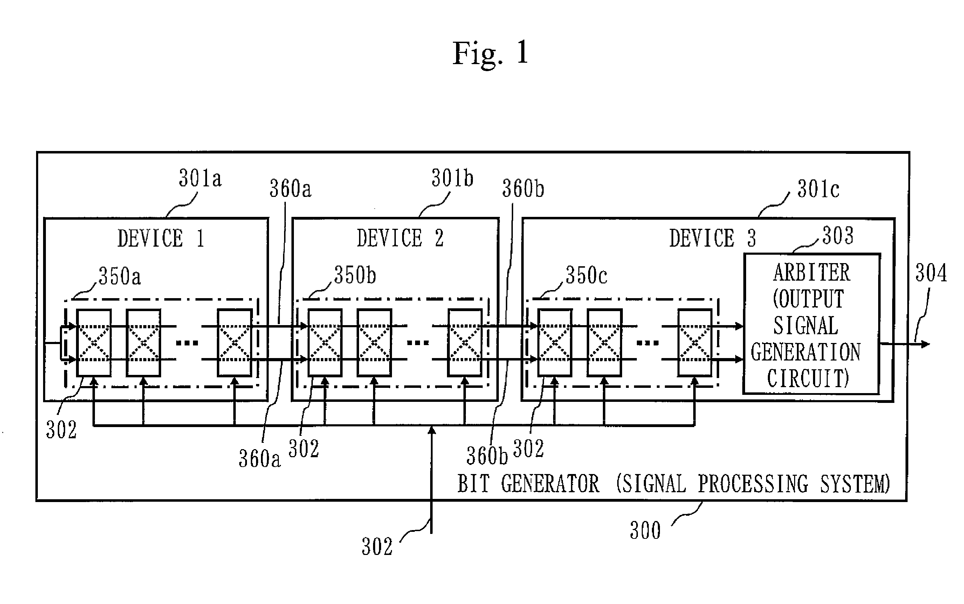

Fig. 1 shows a block diagram of a bit generator 300 (signal processing system) according to a first embodiment.

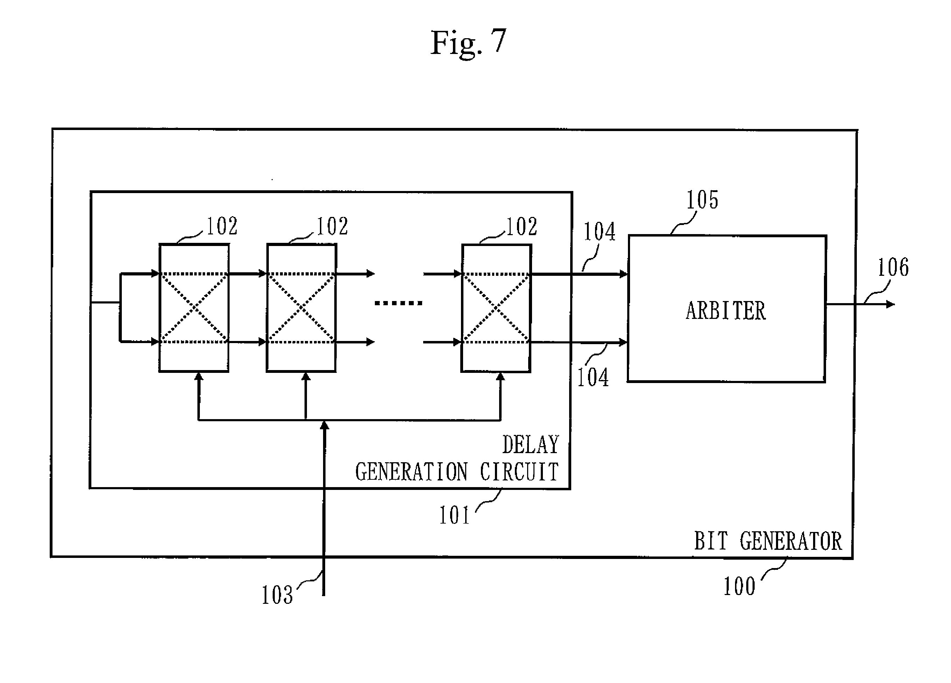

The bit generator 300 of Fig. 1 is configured by dividing the circuit described in Non-Patent Literature 1 in three semiconductor devices (also referred to simply as devices) and mounting them.
In Non-Patent Literature 1, the delay generation circuit having two paths corresponds to the characteristic circuit.
Referring to Fig. 1, the cross units 102 in the delay generation circuit 101 in Fig. 7 are distributed over three semiconductor devices 301a, 301b and 301c so that a delay between the two paths is determined by the characteristics of all the three semiconductor devices 301a, 301b and 301c.
Signals passed through the two paths are determined by an arbiter 303 which arrived first, a determination result is converted into bits, and outputted as an output signal 304.
The arbiter 303 is an example of an output signal generation circuit.

Fig. 1 shows areas 350a, 350b and 350c defined by a dashed-dotted line, which are signal routes formed in the three semiconductor devices 301a, 301b and 301c. The signal route 350a, 350b, 350c includes a plurality of cross units 302.
The cross unit 302 is equivalent to the cross unit 102 in Fig. 7.
Between each device, a connection route 360a or 360b is formed.
The connection routes 360a and 360b between each device are wires on a substrate on which the devices are disposed.
The signal routes 350a, 350b and 350c are connected to each other via the connection routes 360a and 360b. Specifically, the signal route 350a, the connection route 360a, the signal route 350b, the connection route 360b, and the signal route 350c are arranged in sequence without disconnection.
The route that is formed with the signal route 350a, the connection route 360a, the signal route 350b, the connection route 360b, and the signal route 350c and terminated by the arbiter 303 is called a transmission route.
The transmission route is formed by the two paths shown in Fig. 7 (paths 110a and 110b exemplified in Fig. 9 and Fig. 10).

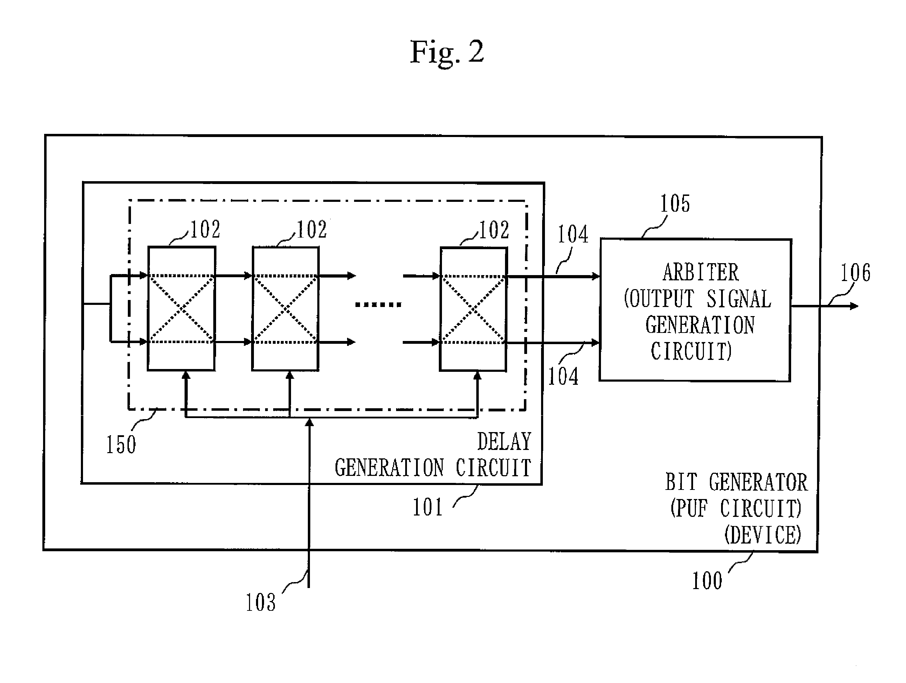

Fig. 2 shows the bit generator 100 of Fig. 7 with explanations added in Fig. 2 for clarifying a relationship between the bit generator 300 in Fig. 1 and the bit generator 100 in Fig. 7.
Referring to Fig. 2, the bit generator 100 is configured with a signal route 150 including the two paths in the delay generation circuit 101.
As described earlier, each path in the signal route 150 is set to have the same path length. However, the path length of each path becomes slightly different from each other when the paths are mounted on the device.
The bit generator 100 also includes the arbiter 105 (output signal generation circuit) disposed at the end of the signal route 150.
The arbiter 105, as seen above, monitors the timing of arrival at the arbiter 105 of a signal passed through each path, and outputs the output signal 106 reflecting a characteristic of difference in path length between the paths based on a difference in timing of arrival between signals passed through the paths.
Note that the bit generator 100 in Fig. 2 is configured with one PUF circuit in one device, which is different from the bit generator 300 in Fig. 1.

In the bit generator 300 in Fig. 1, the signal route 150 of Fig. 2 is modified by the signal routes 350a, 350b and 350c in the plurality of semiconductor devices 301a, 301b and 301c.
Referring to the configuration of Fig. 1, although the two paths of the transmission route formed with the signal route 350a, the connection route 360a, the signal route 350b, the connection route 360b and the signal route 350c are set to have the same path length, the path length becomes slightly different from each other when the paths are mounted.
A signal passes through each path of the transmission route to reach the arbiter 303 in the semiconductor device 301c, via each device.
The arbiter 303 monitors the timing of arrival of the signal passed through each path, and outputs the output signal 304 reflecting the characteristic of difference in path length between the paths along the transmission route based on a difference in timing of arrival between the signals in the paths.

Note that in Fig. 1, the arbiter 303 is disposed in the device 3 (301c). The arbiter 303 may alternatively be disposed in a different device.
More specifically in the configuration example of Fig. 1, a signal passes through devices 1, 2 and 3 in serial order, and therefore the three devices are arranged accordingly in sequence. Thus, the arbiter 303 is disposed in the device 3 which is the last device in sequence.
Alternatively, however, if a signal passes through the devices 1, the device 2, the device 3 and the device 2 in sequence, then the arbiter 303 is disposed in the device 2 which is the last device in sequence.

Thus, according to this embodiment, by dividing and disposing the delay generation route separately in the three devices, if one of the three devices is replaced by another, the characteristic of the devices as a whole is changed, and thereby the output from the bit generator 300 is changed.
Accordingly, the authentication of identity is enabled not only of a single device but also among a combination of devices as a whole.
Further, in this embodiment, bits are generated and outputted based on a combination of three devices as a whole.
When a PUF circuit is mounted on each of three devices and outputs bits for each device, since an authentication is required for each device, the authentication process has to be performed three times to confirm identity among the three devices.
In contrast, the bit generator circuit of this embodiment allows a single authentication for the three devices, and also allows a reduction in the circuit scale.
These advantageous effects allow the bit generation circuit according to this embodiment to help operate anti-counterfeit measures at low cost.

As seen above, according to this embodiment, a description is given of the apparatus which generates information unique to a plurality of semiconductor devices as a whole.
More specifically, the apparatus is configured by dividing a partial circuit that generates the characteristic of a single semiconductor device. The partial circuit is included in a circuit which generates information unique to the semiconductor device. The partial circuits are distributed in the plurality of semiconductor devices.
Further, a description is given of the apparatus configured with the partial circuits of the circuit that generates information unique to a single semiconductor device, to determine the output of the partial circuits for generating the characteristic of the semiconductor device, and generate bits.

Further, a description is given of the output signal generated by the arbiter in the bit generator of this embodiment, which reflects the characteristic unique to the transmission route deployed over the plurality of devices. The authentication of identity among a combination of a plurality of devices is thereby enabled by examining the output signal. This needs fewer operations for the authentication of the plurality of devices, and helps control the circuit scale and the amount of codes required for the authentication of the plurality of devices.

### Embodiment 2.

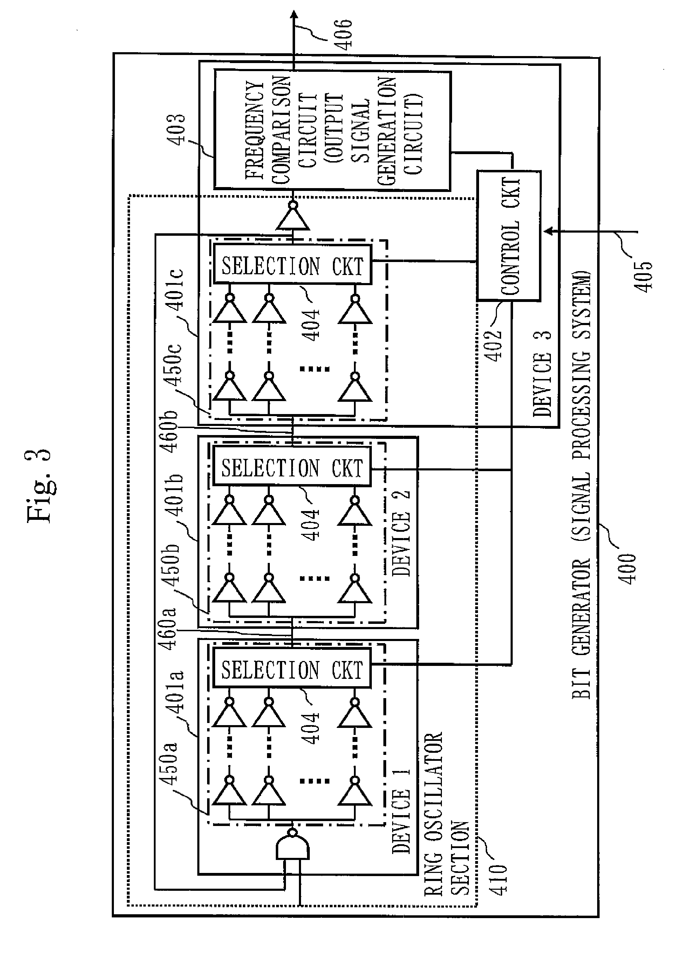

Fig. 3 shows a block diagram of a bit generator 400 (signal processing system) according to a second embodiment.

The bit generator 400 of Fig. 3 is configured by dividing and mounting the circuit described in Patent Literature 1 in three semiconductor devices.
In Patent Literature 1, ring oscillators correspond to the characteristic circuits.

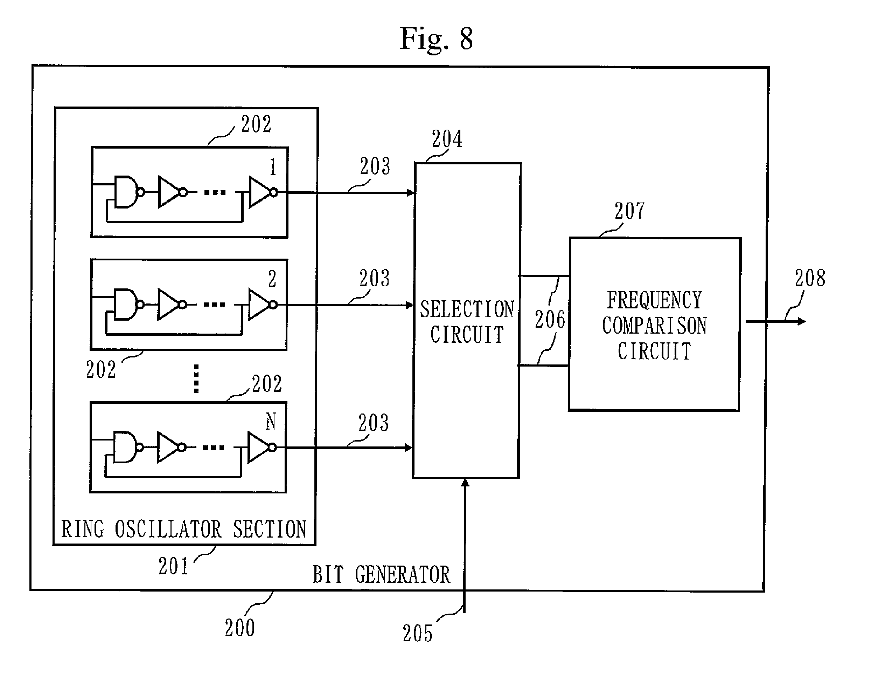

In Fig. 3, the bit generator 400 is configured by separating N ring oscillators shown in Fig. 8 to form three partial circuits which are disposed separately in the three semiconductor devices so that the bits are determined based on the characteristic of the three semiconductor devices as whole.
Referring to Fig. 3, the bit generator 400 is configured with a ring oscillator section 410, a control circuit 402, and a frequency comparison circuit 403.
The ring oscillator section 410 is configured with N (N≥2) ring oscillators divided and mounted separately on the three semiconductor devices. A selection circuit 404 is disposed at the boundary between each device.
The bit generator 400 receives an input signal 405 as a selection signal based on which two clocks are selected from among N clocks. If all the N delay routes are outputted at every boundary between each device, it is a waste of input/output pins in the devices.
Therefore, the selection circuit 404 is employed to select one of the delay routes (ring oscillators) at a time and generates a clock corresponding to the selected delay route.
This operation is performed twice to generate two clocks which correspond to the values of the input signal 405. The values are subject to a determination in the frequency comparison circuit 403.
The bits generated based on a comparison result by the frequency comparison circuit 403 is outputted as an output signal 406.
The frequency comparison circuit 403 is an example of an output signal generation circuit.

Fig. 3 shows areas 450a, 450b and 450c defined by a dashed-dotted line, which are signal routes formed in the three semiconductor devices 401 a, 401b and 401c. The signal route, 450a, 450b, 450c includes N ring oscillators and the selection circuit 404.
Between each device, a connection route 460a or 460b is formed.
The connection routes 460a and 460b between the devices are wires on a substrate on which the devices are disposed.
The signal routes 450a, 450b and 450c are connected to each other via the connection routes 460a and 460b. Specifically, the signal route 450a, the connection route 460a, the signal route 450b, the connection route 460b, and the signal route 450c are arranged in sequence without disconnection.
The route that is formed with the signal route 450a, the connection route 460a, the signal route 450b, the connection route 460b, and the signal route 450c and terminated by the frequency comparison circuit 403 is called a transmission route.

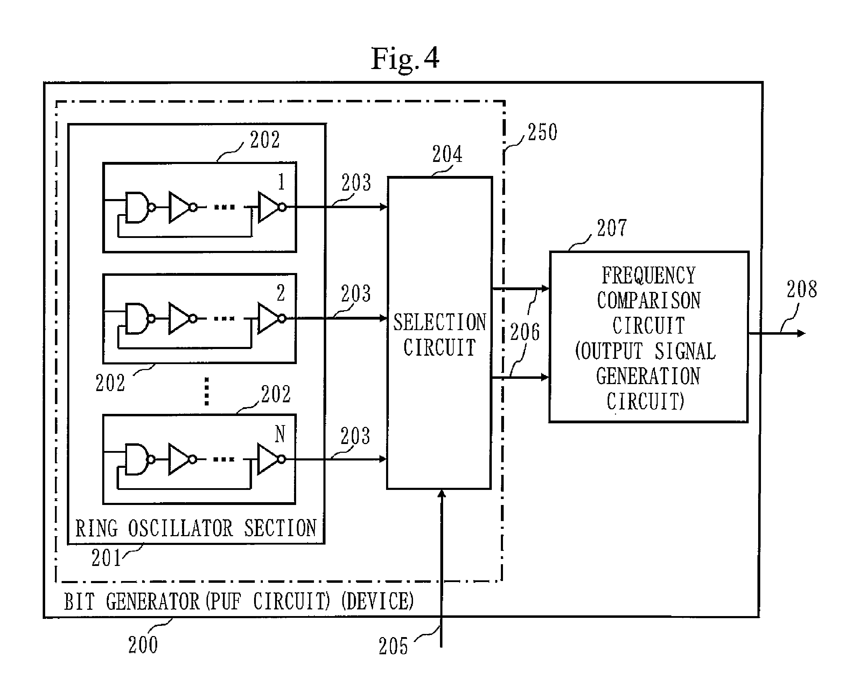

Fig. 4 shows the bit generator 200 of Fig. 8 with explanations added in Fig. 4 for clarifying the relationship between the bit generator 400 in Fig. 3 and the bit generator 200 in Fig. 8.
The bit generator 200 of Fig. 4 is configured with a signal route 250.
As described earlier, the signal route 250 is configured with the N ring oscillators 202 which are set to generate clock signals having the same frequency, and the selection circuit 204 which selects a specific clock signal from among N clock signals generated by the N ring oscillators 202.
The bit generator 200 of Fig. 4 also includes the frequency comparison circuit 207 (output signal generation circuit).
As seen above, the frequency comparison circuit 207 monitors the frequency of a signal selected by the selection circuit 204, and generates the output signal 208 which reflects the frequency characteristic of the N ring oscillators based on monitoring results.
Note that the bit generator 200 of Fig. 4 is configured with a single PUF circuit disposed in a single device, which is different from the bit generator 400 of Fig. 3.

In the bit generator 400 of Fig. 3, the signal route 250 of Fig. 4 is modified by the signal routes 450a, 450b and 450c formed in the plurality of semiconductor devices 401a, 401b and 401 c.
More specifically, each signal route 450a, 450b, 450c is configured with N ring oscillators and the selection circuit 404.
The N ring oscillators, set to generate clock signals having the same frequency, generate clock signals having frequencies slightly different from one another in practice due to variation among individuals.
The selection circuit 404 in each signal route 450a, 450b, 450c is controlled by the control circuit 402 to select a signal from a ring oscillator in the same row.
For example, if instructed to select a ring oscillator in the top row by the control circuit 402, the selection circuit 404 in the signal route 450a selects a signal from a ring oscillator in the top row in the signal route 450a, the selection circuit 404 in the signal route 450b selects a signal from a ring oscillator in the top row in the signal route 450b, and the selection circuit 404 in the signal route 450c selects a signal from a ring oscillator in the top row in the signal route 450c.

In the signal route 450a, N clock signals are generated by the N ring oscillators, a clock signal from a specific ring oscillator (ring oscillator selected by the control circuit 402) is selected by the selection circuit 404, and the selected clock signal is outputted to the connection route 460a.
In the signal route 450b, a signal is inputted from the connection route 460a to the N ring oscillators, N clock signals are generated by the N ring oscillators, a clock signal from a specific ring oscillator (ring oscillator selected by the control circuit 402) is selected by the selection circuit 404, and the selected clock signal is outputted to the connection route 460b.
In the signal route 450c, a clock signal from a specific ring oscillator (ring oscillator selected by the control circuit 402) is selected by the selection circuit 404 by a procedure similar to that performed in the signal route 450b, and the selected clock signal is outputted to the frequency comparison circuit 403.
The above operation is performed twice with the control circuit 402 each time selecting a different ring oscillator (e.g., first with the ring oscillator of the top row, and then with the ring oscillator of the second row).
Then, the frequency comparison circuit 403 monitors the frequencies of inputted two clock signals, compares the frequencies of the two clock signals, and determines as the output signal 406 a clock signal having a higher frequency than the other.
The output signal 406 reflects the frequency characteristic of the ring oscillators in the signal routes 450a, 450b and 450c as a whole.

Note that the frequency comparison circuit 403 is disposed in device 3 in Fig. 3.
The frequency comparison circuit 403 may alternatively be disposed in device 1 or 2.
Referring to the configuration example of Fig. 3, since a signal passes through the device 1, the device 2 and the device 3 in serial order, the three devices are arranged accordingly. Therefore, the frequency comparison circuit 403 is disposed in the device 3 which is the last device in sequence.
Alternatively, if a signal passes through the device 1, the device 2, the device 3, and the device 2 in sequence, for example, the frequency comparison circuit 403 is disposed in the device 2 which is the last device in sequence.
Further, the control circuit 402 is also disposed in the device 3 in Fig. 3. The control circuit 402, however, may be disposed in any device.
Further, the frequency comparison circuit 403 and the control circuit 402 may be disposed separately in different devices.

Thus, according to this embodiment, a description is given of the method of implementing an effect similar to that described in the first embodiment, by employing the configuration with ring oscillators.

Further, a description is given of the output signal generated by the frequency comparison circuit of the bit generator of this embodiment, which reflects the characteristic unique to the transmission route deployed over the plurality of devices. The authentication of identity among a combination of a plurality of devices is thereby enabled by examining the output signal. This needs fewer operations for the authentication of a plurality of devices, and helps control the circuit scale and the amount of codes required for the authentication of a plurality of devices.

### Embodiment 3.

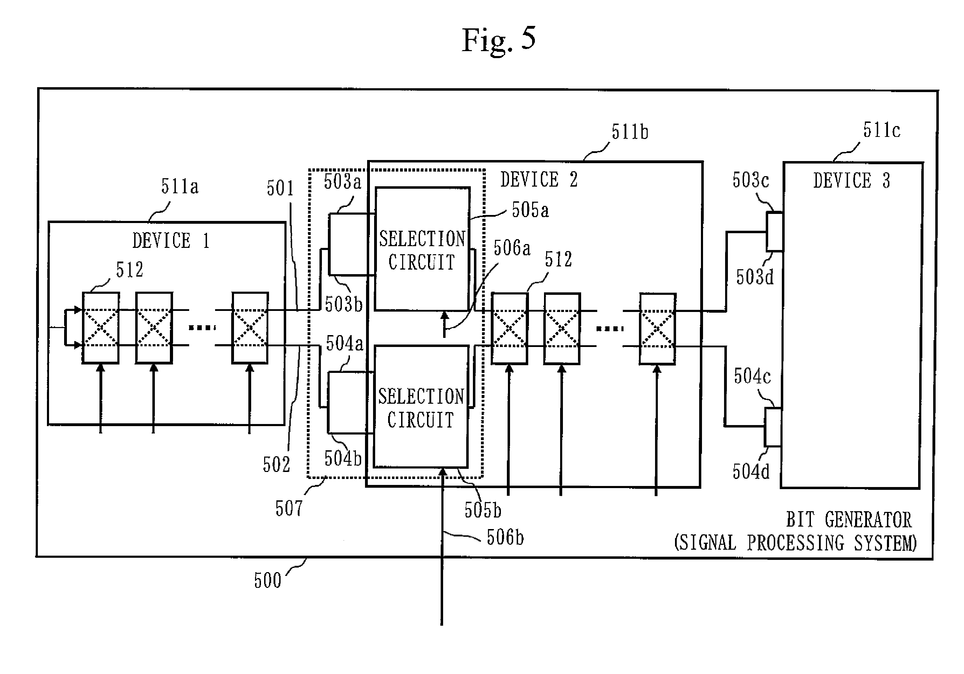

Fig. 5 shows a block diagram of a bit generator 500 (signal processing system) according to a third embodiment.

The bit generator 500 of Fig. 5 is configured by dividing and mounting the circuit described in Non-Patent Literature 1 on three semiconductor devices, wherein wires on a substrate on which the devices are mounted are included as the characteristic circuit of PUF.
Fig. 5 modifies Fig. 1 by adding an area 507 defined by a dotted line.
Note that Fig. 5 illustrates substantial portions only. The configuration except for the area 507 defined by the dotted line is substantially the same as that in Fig. 1.
Referring to the area 507, connection routes 501 and 502 formed between the devices include branch routes 503, 504 which branch into a plurality of routes. The branch routes 503 and 504 enter the subsequent device 2 (511b).
The branch routes 503a and 503b, and 504a and 504b are formed by wires on a substrate on which the devices are mounted.
The device 2 (511b) includes selection circuits 505a and 505b.
The selection circuit 505a receives an external input signal 506a that indicates which signal to be selected from input signals from the branch circuits 503a and 503b.
Likewise, the selection circuit 505b receives an external input signal 506b that indicates which signal to be selected from input signals from the branch circuits 503a and 503b.
The selection circuits 505a and 505b are connected to each path of the subsequent signal route.
The subsequent signal route includes two paths including a plurality of cross units 512, like those described in the first embodiment.
Note that, device 3 (511c) does not show its internal configuration for convenience of drawing. The device 3 is to be configured with the signal route 350c and the arbiter 303 shown in Fig. 1, further including a selection circuit connected to branch routes 503c and 503d and a selection circuit connected to branch routes 504c and 504d, which are disposed before the signal route 350c.
The selection circuits are connected, like the device 2 (511b), to each path in the signal route 350c shown in Fig. 1.

Referring to the area 507 in Fig. 5, signals from device 1 (511 a) is branch on the substrate into the branch routes 503a and 504b of the connection route 501 and into the branch routes 504a and 504b of the connection route 502.
The signals passed through the branch routes 503a and 503b enter the selection circuit 505a, and the signals passed through the branch routes 504a and 504b enter the selection circuit 505b, in the device 2 (511b).
The selection circuit 505a selects an input signal from the branch route 503a or an input signal from the branch route 503b according to the external input signal 506a, and outputs the selected signal to the subsequent signal route path.
Likewise, the selection circuit 505b selects an input signal from the branch route 504a or an input signal from the branch route 504b according to the external input signal 506b, and outputs the selected signal to the other subsequent signal route path.
In the device 3 (511c), a similar operation is performed with input signals from the branch routes 503c, 503d, 504c and 504d.

The bit generator 500 of the third embodiment modifies the bit generator 300 (Fig. 1), i.e., the PUF circuit configured with the plurality of devices, described in the first embodiment. This modification may be applied to the single device (Fig. 7).
In the third embodiment, a signal is branched into the two branch routes. The branch routes, however, may be of any number, of which a maximum number is determined by the number of pins of a device or the size of the substrate.
An increase in the number of branch routes increases the contribution of the substrate characteristic to PUF.

Thus, according to the bit generator of the third embodiment, the connection route on the substrate between each device is equipped with the branch routes to allow a signal to be selected from among signals inputted from a plurality of branch routes in each device. The bit generator thereby generates outputs which are different depending also on the substrate characteristic.
Referring to the branch routes 503a, 503b, 504a and 504b in Fig. 5, while they are designed to have the same length, their lengths in practice slightly differ from each other.
This results in generating the output signal which reflects the unique characteristic (route length in the transmission route) based on the combination of the difference in path length among the branch routes 503a, 503b, 504a and 504b, and the difference in path length between the paths in the signal route in each device.
Therefore, the substrate characteristic is available to be used in combination with the characteristic by the combination of devices described in the first embodiment. The identification of identity among the combination of devices and substrate is thereby enabled.
The devices mounted on a wrong substrate do not work properly even if the combination of the devices is the same. Hence, a highly effective anti-counterfeit measure can be achieved, compared to the first embodiment or the second embodiment.

Thus, according to this embodiment, a description is given of the apparatus which generates the information unique to the combination of a single or a plurality of semiconductor devices and the substrate on which they are mounted.
Further, a description is given of the circuit configuration which includes wires on the substrate as part of the circuit and partial circuits which generates the characteristic of a semiconductor device or its division. The partial circuit is included in a circuit which generates information unique to the semiconductor device circuits.

### Embodiment 4.

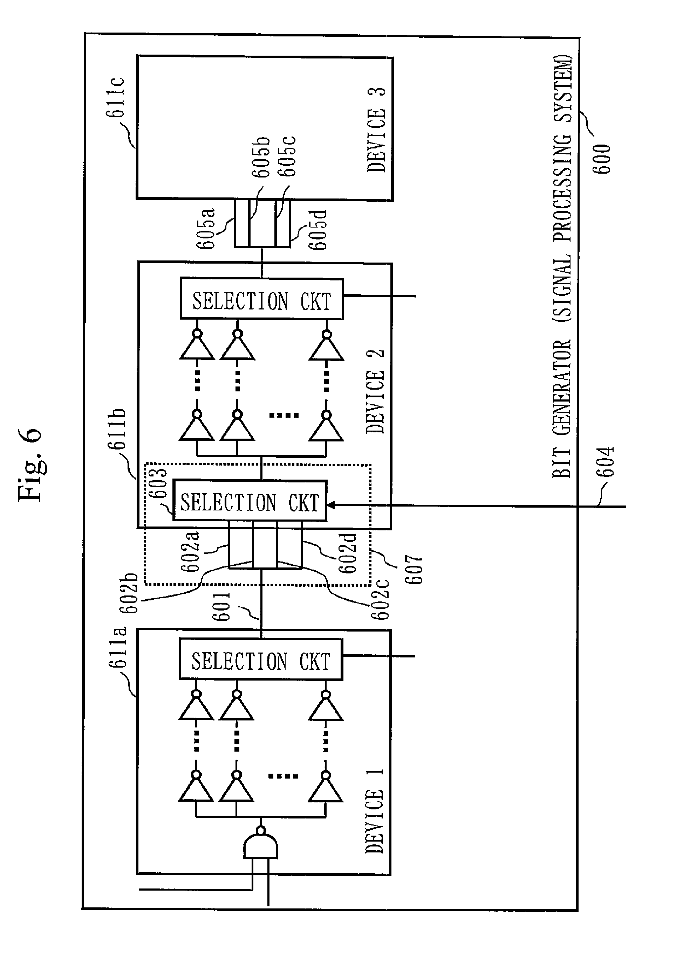

Fig. 6 shows a block diagram of a bit generator 600 (signal processing system) according to a fourth embodiment.

The bit generator 600 of Fig. 6 is configured by dividing and mounting the circuit described in Non-Patent Literature 1 on three semiconductor devices, wherein wires on a substrate on which the devices are mounted are included as the characteristic circuit of PUF.
Fig 6 modifies Fig. 3 by adding an area 607 defined by a dotted line.
Note that Fig. 6 illustrates substantial portions only. The configuration except for the area 607 defined by the dotted line is substantially the same as that in Fig. 3.
Referring to the area 607, a connection route 601 between devices includes branch route 602 which branches into a plurality of routes. The branch route 620 enters the subsequent device 2 (511b).
The branch routes 602a, 602b, 602c and 602d are formed by wires on the substrate on which the devices are mounted.
The device 2 (611b) includes a selection circuit 603.
The selection circuit 603 receives an external input signal 604 that indicates which signal to be selected from among input signals from the branch circuits 602a to 602d.
Note that the device 3 (611c) does not show its internal configuration for convenience of drawing. The device 3 is to be configured with the signal route 450c and the frequency comparison circuit 403 shown in Fig. 3, further including a selection circuit connected to branch routes 605a to 605d which are disposed before the signal route 450c.
The selection circuit is connected, like the device 2 (611b), to the N ring oscillators in the signal route 450c shown in Fig. 3.

Referring to the area 607 in Fig. 6, a signal from device 1 (611a) is branched on the substrate into the branch routes 602a to 602d of the connection route 601. The signals passed through the branch routes 602a to 602d enter the selection circuit 603, in the device 2 (611b).
The selection circuit 603 selects one of input signals from the branch routes 602a to 602d based on the external input signal 604, and outputs the selected signal to the N ring oscillators in the subsequent signal route.
In the device 3 (611c), a similar operation is performed with input signals from the divided routes 605a to 605d.

Note that there are four of the branch routes in Fig. 6. The branch routes, however, may be of any number, of which a maximum number is determined by the number of pins of a device or the size of the substrate.
An increase in the number of the branch routes increases the contribution of the substrate characteristic to PUF.

Thus, according to this embodiment, a description is given of the method of implementing an effect similar to that described in the third embodiment, by employing the configuration with ring oscillators.

### Reference Signs List

- 100: bit generator
- 101: delay generation circuit
- 102: cross unit
- 103: selection signal
- 104: signal
- 105: arbiter
- 106: output signal
- 150: signal route
- 200: bit generator
- 201: ring oscillator section
- 202: ring oscillator
- 203: signal line
- 204: selection circuit
- 205: input signal
- 206: signal line
- 207: frequency comparison circuit
- 208: output signal
- 250: signal route
- 300: bit generator
- 301: semiconductor device
- 302: cross unit
- 303: arbiter
- 304: output signal
- 350: signal route
- 360: connection route
- 400: bit generator
- 401: semiconductor device
- 402: control circuit
- 403: frequency comparison circuit
- 404: selection circuit
- 405: input signal
- 406: output signal
- 410: ring oscillator section
- 450: signal route
- 460: connection route
- 500: bit generator
- 501: connection route
- 502: connection route
- 503: branch route
- 504: branch route
- 505: selection circuit
- 506: external input signal
- 511: semiconductor device
- 512: cross unit
- 600: bit generator
- 601: connection route
- 602: branch route
- 603: selection circuit
- 604: external input signal
- 605: branch route
- 611: semiconductor device

## Claims

1. A signal processing system including a plurality of devices arranged in sequence, comprising:
a signal route of a PUF (Physical Uncloneable Function) circuit configured in each of the plurality of devices, the PUF circuit including the signal route through which signals flow, and an output signal generation circuit which terminates the signal route, monitors the signals passed through the signal route, and generates an output signal reflecting a characteristic unique to the signal route based on monitoring results of the signals passed through the signal route; and
a connection route that connects the signal route in each device to the signal route in a subsequent device;
wherein:
the signal routes in the plurality of devices and the connection route between each device forms a transmission route,
the signal processing system further comprising:
the output signal generation circuit of the PUF circuit that is disposed in the last device in sequence of the plurality of devices, and terminates the transmission route,
wherein:
predetermined signals flow through the transmission route in accordance with a sequence of devices, and are inputted by the output signal generation circuit in the last device in sequence, and
the output signal generation circuit in the last device in sequence monitors inputted signals, and generates an output signal reflecting a characteristic unique to the transmission route based on monitoring results.

2. The signal processing system according to claim 1,
wherein:
the plurality of devices are disposed on a predetermined substrate, and
the connection route between each device is formed by a wire on the substrate.

3. The signal processing system according to claim 2, wherein the connection route between each device includes a branch route which branches into a plurality of branch routes, each of a plurality of branch routes entering a subsequent device.

4. The signal processing system according to claim 3,
wherein:
each device includes a signal selection circuit which is connected to the plurality of branch routes and a subsequent signal route, and
the signal selection circuit is configured to input a plurality of signals from the plurality of branch routes, select a specific signal from among the plurality of inputted signals, and output the selected signal to the subsequent signal route.

5. The signal processing system according to any one of claims 1 to 4, wherein:
the signal route of the PUF circuit is configured in each of the plurality of devices, the PUF circuit including the signal route which includes a plurality of paths which are set to have the same path length, and the output signal generation circuit which monitors a timing of arrival at the output signal generation circuit of a signal passed through each of the plurality of paths, and generates an output signal reflecting a characteristic of difference in path length between the paths based on a difference in the timing of arrival between the signals;
the plurality of paths of the signal route in each device is connected to the plurality of paths of the signal route in a subsequent device, via a plurality of paths included in the connection route;
the transmission route formed by the signal routes in the plurality of devices and the connection route between each device includes a plurality of paths;
a predetermined signal flows through each path of the transmission route in accordance with the sequence of devices and is inputted by the output signal generation circuit in the last device in sequence; and
the output signal generation circuit monitors a timing of arrival at the output signal generation circuit of each signal passed through each of the paths of the transmission route, and generates an output signal reflecting a characteristic of difference in path length between the plurality of paths of the transmission route based on a difference in the timing of arrival between the signals.

6. The signal processing system according to any one of claims 1 to 4, wherein:
the signal route of the PUF circuit is configured in each of the plurality of devices, the PUF circuit including the signal route which includes a plurality of ring oscillators set to generate signals having the same frequency and a selection circuit configured to select a predetermined number of signals from among a plurality of signals generated by the plurality of ring oscillators, and in the PUF circuit the output signal generation circuit monitors the frequency of a signal selected by the selection circuit, and generates an output signal reflecting a frequency characteristic among the plurality of ring oscillators based on monitoring results;
the signal route in each device is connected to the signal route in a subsequent device, via the connection route which does not include the ring oscillators and the selection circuit;
the transmission route is formed by the signal routes in the plurality of devices and the connection route between each device;
in the transmission route, an operation is repeated for each signal route in the devices,
the operation including:
outputting a signal inputted from the connection route to the plurality of ring oscillators,
the selection circuit selecting a specific signal from among the plurality of signals generated by the plurality of ring oscillators, and
outputting the signal selected to the connection route;
a signal selected by the selection circuit in the last device in sequence is inputted by an output signal route in the last device in sequence, and
the output signal generation circuit in the last device in sequence monitors the frequency of an inputted signal, and generates an output signal reflecting the frequency characteristics of the ring oscillators in the signal routes in the plurality of devices, based on monitoring results.
